# EUROPÄISCHE PATENTANMELDUNG

(11) **EP 2 455 834 A1**
(43) Veröffentlichungstag der Anmeldung: **23.05.2012**
(21) Anmeldenummer: 10192056.9
(22) Anmeldetag: 22.11.2010
(51) Int. Cl.: G05B 19/418, H04L 12/24

(54) **Einrichtung und Verfahren zum Projektieren einer Anordnung mit über Kommunikationsverbindungen verbindbaren Komponenten**

(71) Anmelder: SIEMENS AKTIENGESELLSCHAFT, 80333 München (DE)
(72) Erfinder: Löwe, Andreas, 92318, Neumarkt (DE)

(57) **Zusammenfassung**

Die Erfindung betrifft ein Verfahren und eine Einrichtung (TM) zum Projektieren von Kommunikationsverbindungen in einer Anordnung mit über die Kommunikationsverbindungen verbindbaren Komponenten (node1 ..., node4), insbesondere mit Automatisierungskomponenten einer industriellen Automatisierungsanordnung, wobei ein Editor zur Darstellung und Bearbeitung der Anordnung mit den Kommunikationsverbindungen vorgesehen ist, und wobei eine Darstellung und Bearbeitung der Anordnung mit den Kommunikationsverbindungen in einer logischen Sicht oder in einer physikalischen Sicht vorgesehen ist. Dabei ist die Einrichtung (TM) zur wechselweisen Darstellung und Bearbeitung der Anordnung mit den Kommunikationsverbindungen in der logischen und in der physikalischen Sicht eingerichtet, wobei die Einrichtung (TM) zur Umsetzung der logischen Sicht in die physikalische Sicht (PV), und/oder zu einer Änderung einer bereits gespeicherten physikalischen Sicht nach einer Änderung in der logischen Sicht eingerichtet ist, und wobei die Einrichtung (TM) zur Berücksichtigung vorgegebener technischer Eigenschaften der Komponenten (node1 ..., node4) und vorgegebener funktionaler Eigenschaften oder Ziele der Anordnung zur Umsetzung der Kommunikationsverbindungen ausgebildet ist. Durch eine solche Einrichtung (TM) und durch ein solches Verfahren wird die Projektierung von Kommunikationsverbindungen von Komponenten (node1 ..., node4) in industriellen Automatisierungsanordnungen vereinfacht, wobei automatisch Kriterien und Randbedingungen zur Erzeugung des jeweiligen Zielmodells berücksichtigt werden.

## Beschreibung

Die Erfindung betrifft eine Einrichtung zum Projektieren einer Anordnung mit über Kommunikationsverbindungen verbindbaren Komponenten gemäß dem Oberbegriff des Patentanspruchs 1, und ein Verfahren zum Projektieren einer Anordnung mit über Kommunikationsverbindungen verbindbaren Komponenten gemäß dem Oberbegriff des Patentanspruchs 7.

Die Projektierung und Programmierung von industriellen Automatisierungsanordnungen und anderen Anordnungen mit Komponenten, welche mittels Kommunikationsverbindungen miteinander kommunizieren können, erfolgt mittels computergestützter Hilfsmittel, die häufig als "Engineering-Systeme" bezeichnet werden. Diese Engineering-Systeme umfassen regelmäßig sog. Editoren, die mit einer graphischen Benutzeroberfläche ausgerüstet sind, wobei auf der graphischen Benutzeroberfläche symbolhaft die projektierten Komponenten bzw. die zu projektierenden Komponenten dargestellt werden. Die Kommunikationsbeziehungen und damit die Kommunikationsverbindungen zwischen den Komponenten werden dabei zumeist durch Linien oder andere Verbindungselemente visualisiert. Ein Benutzer hat dabei die Möglichkeit, mittels graphischer Werkzeuge die logischen Kommunikationsbeziehungen oder die physikalischen Kommunikationsbeziehungen (Verbindungen) zwischen den Komponenten festzulegen. Weiter ist es einem Benutzer möglich, den Kommunikationsanschlüssen, auch "Ports" genannt, den Komponenten und den Kommunikationsverbindungen Eigenschaften zuzuordnen, beispielsweise die Zugehörigkeit zu logischen Sub-Netzwerken, Adressbereiche, Kommunikationsparameter oder dgl.

Während insbesondere in einem frühen Stadium einer Planung oder Projektierung vorwiegend logische Kommunikationsbeziehungen zwischen den projektierten Komponenten festgelegt werden, ist es vorwiegend zu einem späteren, realisierungsnahen Zeitpunkt oft erforderlich, auf die physikalischen Belange der Kommunikationsverbindungen und damit der Projektierung näher einzugehen. Dazu besitzen viele Editoren der Entwicklungssysteme bzw. Engineering-Systeme die Möglichkeit, wahlweise in einer sog. "logischen Sicht" oder einer "physikalischen Sicht" zu arbeiten. Während in der logischen Sicht die Kommunikationsbeziehungen zwischen den Komponenten eher abstrakt festgelegt werden und logische Kommunikationsnetze bzw. Sub-Netze festgelegt werden, werden in der physikalischen Sicht die Komponenten mit samt ihrer physikalischen Kommunikationsanschlüsse (Ports) dargestellt, wobei die Verbindungen zwischen den Ports, also die tatsächlichen Leitungen und sonstige Verbindungsmittel, dargestellt werden. Während also in der logischen Sicht auch logische Ethernet-Sub-Netze, die beispielsweise durch eine eindeutige Netzwerk-ID und die Vergabe von eindeutigen IP-Adressen für die jeweilige NetzwerkKonten projektiert sind, dargestellt werden, werden in der physikalischen Sicht vorwiegend die physikalischen Ports der Automatisierungskomponenten dargestellt. Diese werden in der physikalischen Sicht im Entwicklungssystem entsprechend der tatsächlich notwendigen Verschaltung miteinander verbunden, wobei diese Verbindungen analog zu den logischen Verbindungen eben in ihrer physikalischen Sicht dargestellt werden.

In bestimmten Anwendungsfällen, beispielsweise bei der Projektierung von Netzwerken des Standards Profinet IRT (IRT = Isochronous Real Time) oder bei der Projektierung von Leitungsüberwachung etc. ist die Projektierung einer physikalischen Port-Verschaltung unabdingbar, was bedeutet, dass in solchen Fällen ein Benutzer eines Engineering-Systems die physikalische Sicht verwenden muss. In anderen Anwendungsfällen, beispielsweise in Netzwerken gemäß Profinet RT (RT = Real Time), bei azyklischer Kommunikation oder Routing, kann auf die gesonderte Projektierung einer physikalischen Port-Verschaltung verzichtet werden. Hier ist meist allein eine logische Sicht auf die Netzwerkkonten zweckdienlich bzw. ausreichend.

Bei den bislang verwendeten Einrichtungen zur Projektierung muss sich ein Anwender je nach Anwendungsfall entscheiden, ob die logische Sicht oder ob die physikalische Sicht für seinen Anwendungsfall das geeignete Projektierungsmittel ist. Diese Entscheidung trifft der Anwender zu Beginn seiner Projektierung. Falls das Automatisierungsprojekt mehrere Anwendungsfälle abdeckt, müssen die Zusammenhänge zwischen logischer Vernetzung und physikalischer Verschaltung manuell durch den Anwender aufgelöst oder umgesetzt werden. Hierzu sind ggf. mehrere Projektierungsschritte notwendig, wobei der Anwender die Zusammenhänge zwischen den logischen und den physikalischen Sichten kennen muss und berücksichtigen muss. Insbesondere ist es häufig nötig, dass ein Anwender zuerst die Komponenten, also die Netzwerkknoten, logisch miteinander verbindet, und danach die physikalisch tatsächlich vorhandenen Ports miteinander verschaltet. Dabei können Fehler auftreten, wobei fortgeschrittene Engineering-Systeme vor einem "Download" der Projektierungsdaten auf eine reale Komponente (Hardware) eine Konsistenzüberprüfung durchführen, wobei einige typischer Weise auftretende Inkonsistenzen erkannt werden können, wonach entsprechende Fehlermeldungen generiert werden. Diese Fehler können dann durch den Anwender manuell behoben werden. Zudem ist es üblich, dass ein Engineering-System eine Bedienreihenfolge vorgibt. Beispielsweise ist die Konfiguration einer physikalischen Port-Verschaltung erst dann möglich, wenn die entsprechenden Komponenten (Knoten) in einem gemeinsamen logischen Sub-Netz projektiert sind, also beispielsweise zu einem gemeinsamen "Netzwerk-Konto" gehören.

Es ist eine Aufgabe der vorliegenden Erfindung, die Projektierung von Kommunikationsverbindungen von Komponenten, insbesondere von Automatisierungskomponenten einer industriellen Automatisierungsanordnung, zu vereinfachen, wobei ein Benutzer insbesondere bei der fehlerträchtigen Umsetzung einer logischen Sicht in eine physikalische Sicht unterstützt werden soll.

Ein wesentlicher Gedanke bei der Lösung der Aufgabe liegt darin, dass eine Einrichtung ("Editor") vorgesehen sein soll, der die Umsetzung einer logischen Sicht in eine physikalische Sicht (und umgekehrt) weitgehend automatisch vornimmt, wobei die Einrichtung für die Umsetzung zur Berücksichtigung von "Randbedingungen" eingerichtet ist. Die Umsetzung einer logischen in eine physikalische Sicht (und umgekehrt) ist nämlich nicht eindeutig, d.h., dass eine logische Sicht in eine Vielzahl unterschiedlicher physikalischer Sichten umgesetzt werden kann (und umgekehrt). Da jedoch nur wenige oder oft nur eine einzige der möglichen physikalischen Realisierungen tatsächlich die gewünschte Funktionalität und andere Bedingungen erfüllt, sind bei der erfindungsgemäßen Einrichtung Randbedingungen, technische Eigenschaften, funktionale Eigenschaften, Ziele etc. vorgebbar, die bei der Umsetzung automatisch berücksichtigt werden, so dass das gewünschte Ergebnis erzielt werden kann.

Die Lösung der Aufgabe sieht insbesondere eine Einrichtung gemäß dem Patentanspruch 1 und ein Verfahren gemäß dem Patentanspruch 7 vor.

Dabei ist eine Einrichtung zum Projektieren von Kommunikationsverbindungen in einer Anordnung mit über die Kommunikationsverbindung verbindbaren Komponenten vorgesehen, insbesondere mit Automatisierungskomponenten bei einer industriellen Automatisierungsanordnung, wobei ein Editor zur Darstellung und Bearbeitung der Anordnung mit den Kommunikationsverbindungen vorgesehen ist, und wobei eine Darstellung und Bearbeitung der Anordnung mit den Kommunikationsverbindungen in einer logischen Sicht oder in einer physikalischen Sicht vorgesehen ist. Dabei ist die Einrichtung zur wechselweisen Darstellung und Bearbeitung der Anordnung mit den Kommunikationsverbindungen in der logischen und in der physikalischen Sicht eingerichtet, wobei die Einrichtung zur Umsetzung der logischen Sicht in die physikalische Sicht, und/oder zu einer Änderung einer bereits gespeicherten physikalischen Sicht nach einer Änderung in der zugrunde liegenden logischen Sicht eingerichtet ist, und wobei die Einrichtung zur Berücksichtigung vorgegebener technischer Eigenschaften der Komponenten und vorgegebener funktionaler Eigenschaften oder Ziele der Anordnung zur Umsetzung der Kommunikationsverbindungen ausgebildet ist. Durch eine solche Einrichtung wird die Projektierung von Kommunikationsverbindungen insbesondere in industriellen Automatisierungsanordnungen vereinfacht, indem eine Umsetzung der logischen Sicht (logischer Vernetzung) in eine physikalische Sicht (physikalische Verschaltung) automatisch und zielgerichtet vorgenommen wird, d.h., dass durch die Beachtung von vorgegebenen funktionalen Eigenschaften, Ziele und Randbedingungen eine eindeutige und richtige Abbildung der logischen Vernetzung in eine physikalische Verschaltung automatisch erreicht werden kann.

Dieselben Vorteile lassen sich weiter auch durch ein Verfahren zur Projektierung von Kommunikationsverbindungen in einer Anordnung mit über die Kommunikationsverbindungen verbindbaren Komponenten, insbesondere mit Automatisierungsanordnungen einer industriellen Automatisierungsanordnung, erreichen, indem zur Projektierung die zuvor beschriebene Einrichtung eingesetzt wird, wobei eine automatische Umsetzung einer logischen Sicht (logischer Vernetzung) in eine physikalische Sicht (physikalische Verschaltung) vorgesehen ist, wobei zu der Umsetzung der Kommunikationsverbindungen bzw. Kommunikationsbeziehungen vorgegebene technische Eigenschaften der Komponenten und vorgegebene funktionale Eigenschaften oder Ziele der Anordnung berücksichtigt werden.

Vorteilhafte Ausgestaltungen der erfindungsgemäßen Einrichtung sind in den abhängigen Patentansprüchen angegeben. Die dabei beschriebenen Merkmale und Vorteile gelten sinngemäß auch für das erfindungsgemäße Verfahren.

Vorteilhaft wird die Einrichtung nicht nur zur Umsetzung einer logischen Sicht in eine physikalische Sicht bzw. Verschaltung verwendet, sondern auch für den umgekehrten Fall, nämlich, dass die Einrichtung zur Umsetzung der physikalischen Sicht in die oder in eine logische Sicht eingerichtet ist, oder aber zur Änderung einer bereits gespeicherten logischen Sicht, die nach einer Änderung in der zugrunde liegenden physikalischen Sicht erfolgen soll, wobei die Einrichtung zur Berücksichtigung vorgegebener technischer Eigenschaften der Komponenten und/oder vorgegebener funktionaler Eigenschaften oder Ziele der Anordnung ausgebildet ist.

Die Einrichtung ist vorteilhafterweise zur Verwendung von vorgegebenen Kommunikationsklassen, Rollen, Sicherheitseinstellungen, Datenraten, Laufzeit-Grenzen oder Topologien als zu erreichende funktionale Eigenschaften oder Ziele eingerichtet. Dadurch kann sichergestellt werden, dass aus der Menge der möglichen Ziel-Konfigurationen eine passende ausgewählt wird.

Vorteilhaft ist die Einrichtung auch zum Vorschlagen und/oder zum automatischen Einfügen zusätzlicher Komponenten eingerichtet, deren Verwendung zur Erfüllung der vorgegebenen technischen oder funktionalen Eigenschaften oder Ziele erforderlich sind. Außerdem ist es von Vorteil, wenn für den Fall einer Umsetzung einer logischen Sicht in eine physikalische Verschaltung durch die Einrichtung aus einer Menge vorgegebener, möglicher Komponenten die passenden auswählt. Dies bedeutet, dass beispielsweise in der logischen Sicht nur Komponenten-Klassen vorgegeben werden müssen, wonach die Einrichtung automatisch aus der jeweiligen Komponenten-Klasse diejenige Komponente auswählt, welche zur Realisierung der in der logischen Sicht definierten Kommunikationsstruktur unter Berücksichtigung der vorgegebenen "Randbedingungen" geeignet ist. Als zusätzliche Komponenten, die nicht notwendigerweise in der logischen Sicht projektiert oder angezeigt werden, kommen beispielsweise Switche, Repeater, Hubs oder andere aktive Netzwerkkomponenten in Frage.

Als zusätzliche, vorteilhafte Funktion ist die Einrichtung zur Durchführung zumindest eines Optimierungsschrittes eingerichtet, insbesondere zur Verbesserung der Leistungsfähigkeit der Kommunikationsverbindungen oder zur Reduzierung erforderlicher Hardware-Komponenten.

Ausführungsbeispiele einer erfindungsgemäßen Einrichtung werden nachfolgend anhand der Zeichnungen erläutert. Sie dienen gleichzeitig der Erläuterung eines erfindungsgemäßen Verfahrens.

Dabei zeigen:
- Figur 1: in schematischer Darstellung eine Anordnung mit Kommunikationsverbindungen jeweils in einer logi-schen Sicht und in einer physikalischen Sicht,
- Figur 2: in schematischer Darstellung die Umsetzung der phy-sikalischen Sicht in eine logische Sicht, und umge-kehrt,
- Figur 3: in schematischer Darstellung eine Einrichtung zur Umsetzung eines Kommunikationsmodells, also einer physikalischen Sicht oder einer logischen Sicht,
- Figur 4: in schematischer Darstellung ein Beispiel für eine Umsetzung einer logischen Sicht (logische Vernet-zung) in eine physikalische Sicht (physikalische Verschaltung), und
- Figur 5: als Beispiel für den umgekehrten Fall in schemati-scher Darstellung eine Umsetzung einer physikali-schen Sicht (physikalische Verschaltung) in eine logische Sicht (logischer Vernetzung).

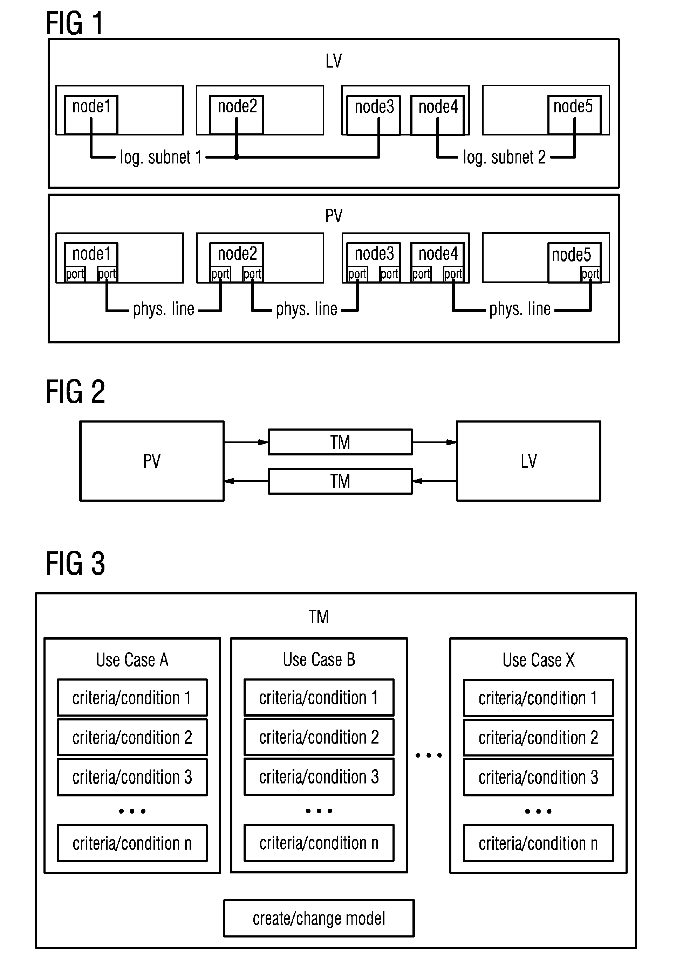

In der Figur 1 sind vier Gruppen mit insgesamt fünf Komponenten node1, ..., node5 ("Knoten") dargestellt, wobei jede der Komponenten node1, ..., node5 über mehrere physikalische Ports verfügt. Im oberen Teil der Figur 1 sind diese Knoten in einer logischen Sicht (logischen Vernetzung) dargestellt, wobei zwei Subnetze definiert sind (log. Subnet1, log. Subnet2). Im unteren Teil der Figur 1 ist die dazu korrespondierende physikalische Sicht (physikalische Verschaltung) dargestellt, wobei hier die Komponenten node1, ..., node5 mit samt ihrer physikalischen Ports dargestellt sind. Weiter ist dabei zu sehen, dass jeder physikalische Port (Kommunikationsanschluss) entweder überhaupt nicht angeschlossen ist, oder aber mittels einer physikalischen Verbindung ("phys. line") mit genau einem physikalischen Port ("port") eines anderen Knotens verbunden ist. Dies entspricht beispielsweise einer Ethernet-Verkabelung bzw. einer Profinet-Anordnung. Weiter ist zu sehen, dass die physikalische Sicht der Strukturierung, also den logischen Subnetzen, der logischen Sicht entspricht, indem die Komponenten node1, node2, node3 ein erstes Subnetz ("log. subnet 1") bilden, und die Komponenten node4, node5 ein zweites logisches Subnetz ("log. subnet 2").

Die in der Figur 1 dargestellten Sichtweisen (logische Sicht LV, physikalische Sicht PV) entsprechen den auswählbaren Sichtweisen ("views") einer Benutzeroberfläche zur Projektierung, insbesondere einer Benutzeroberfläche eines Engineering-Systems für industrielle Automatisierungsanordnungen. Erfindungsgemäß umfasst eine solche Benutzeroberfläche eine Einrichtung TM (Transformations-Modellierer) zur Umsetzung einer logischen Sicht LV in eine physikalische Sicht PV, und umgekehrt. Dabei stellt die Umsetzung der physikalischen Sicht PV in die logische Sicht LV eine zusätzlich mögliche vorteilhafte Ausgestaltung der Erfindung dar. Die Funktion der Einrichtung TM ist dabei in der Figur 2 dargestellt, woraus ersichtlich ist, dass die logische Sicht LV in die physikalische Sicht PV umsetzbar ist, und umgekehrt.

Ein durch eine Anwenderaktion ausgelöstes Ereignis, beispielsweise das Editieren einer physikalischen Verschaltung von Ports oder das Editieren einer Anordnung in einer logischen Sicht LV, führt zum Aufruf der Einrichtung TM. Dabei ist die Einrichtung TM eine "Business Logic", die dafür sorgt, dass mittels bestimmter Transformationskriterien automatisch eine konsistente Abbildung der projektierten logischen Vernetzung in eine physikalische Portverschaltung, oder umgekehrt, geschieht. In der Figur 3 sind dazu schematisch als "Randbedingungen" verschiedene Anwendungsfälle (Use Case A, Use Case B, Use Case X) aufgeführt, die jeweils mit verschiedenen Eigenschaften oder Zielen (criteria/condition 1, ..., criteria/condition n) verknüpft sind. Diese Randbedingungen sind notwendig, um die per se nicht eindeutige Abbildung einer ersten Sicht in eine andere Sicht derart vorzunehmen, dass das Transformationsergebnis eine Anordnung mit der gewünschten Funktionalität darstellt. Dazu kann die "Transformation" mittels der Einrichtung TM entweder nach jeglicher Änderung am Ursprungs-Modell vorgenommen werden, oder aber nach Anweisung, beispielsweise durch Betätigen einer Befehlsfunktion "create/change model". Dabei werden Anwendungsfallspezifische Kriterien berücksichtigt, so dass die Einrichtung TM sowohl eine Transformation als auch eine Modelländerung des Zielmodells vornimmt. Vorteilhaft ist dazu die Einrichtung TM in der Lage, den Anwendungsfall automatisch zu erkennen, die passenden Kriterien auszuwählen, die notwendigen physikalischen Kommunikationswege aufzufinden (im Fall einer Transformation einer logischen Sicht LV in eine physikalische Sicht PV), dazu eine Optimierung der physikalischen Kommunikationsstrecken, beispielsweise bezüglich einer benötigten Bandbreite, vorzunehmen, unterschiedliche Topologien zu erzeugen (Linien-/Stern-/Ring-Verschaltung der physikalischen Ports), Sicherheitseinstellungen der Komponenten zu berücksichtigen, die Nutzbarkeit der physikalischen Ports für die verschiedenen Kommunikationsprotokolle zu berücksichtigen und schließlich - in einer vorteilhaften Ausgestaltung - das automatische Anlegen oder Instantiieren von Objekten des Engineeringsystems vorzunehmen, die als Basis für einen "Download" auf eine reale Hardware dienen, als Berechnungsgrundlage dienen, oder der Visualisierung dienen.

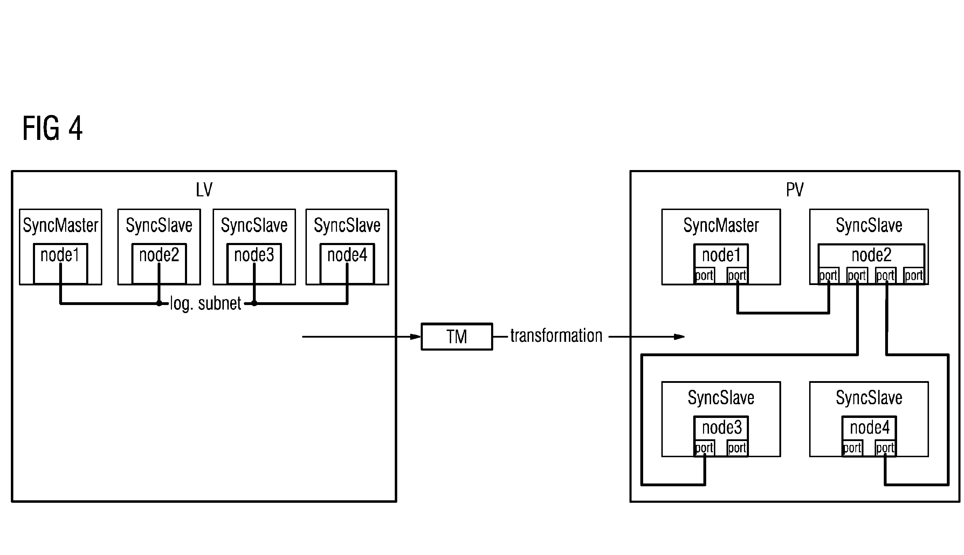

In der Figur 4 ist exemplarisch die Umsetzung einer logischen Sicht LV in eine physikalische Sicht PV dargestellt, wobei vier Komponenten node1, ..., node4 in einem gemeinsamen logischen Subnetz angeordnet sind. Anhand der physikalischen Sicht PV ist zu sehen, dass lediglich die Komponente node2 über mehr als zwei physikalische Kommunikationsanschlüsse (Ports) verfügt. Ein Synchronisationssignal, welches von der Komponente node1 erzeugt wird, muss also durch die Komponente node2 "verteilt" werden. Es sei angenommen, dass es ein Ziel der "Transformation" ist, die maximale Signallaufzeit und damit die maximale Anzahl von "Hops" für Synchronisierungsnachrichten in dieser Anordnung möglichst gering zu halten. Deswegen können in der physikalischen Verschaltung (physikalische Sicht PV) die Komponenten node1, ..., node4 nicht seriell verkettet werden, sondern es muss eine Komponente, nämlich die Komponente node2, als "Verteiler" eingesetzt werden. So wird vermieden, dass im Unterschied zu einer seriellen oder ringförmigen Verkettung ein Datenpaket, welches von der Komponente node1 versendet wird, mehr als einmal auf seinem Weg bis zur letzten Komponente weitergeleitet werden muss.

Hierbei erfüllen die logisch vernetzten Komponenten node1, ..., node4 bestimmte Kriterien bzw. Bedingungen, die sie dazu befähigen, zyklischen Datenaustausch beispielsweise über Profinet IRT zu betreiben. Die Einrichtung TM erkennt dabei den Anwendungsfall und die notwendigen Kriterien, beispielsweise die Synchronisationsrolle der Geräte Profinet RT - Klassen der Geräte, Aktivierung einer Leitungsüberwachung etc. Die Einrichtung TM erzeugt danach eine physikalische Verschaltung bzw. Sicht PV für den IRT-Betrieb der Geräte. Hierbei berücksichtigt die Einrichtung TM Lastgrenzen der Übertragungsstrecken und Beschränkungen an den einzelnen Ports bezüglich der Weiterleitfähigkeit bestimmter Ethernet-Protokolle, sog. "Port-Boundaries". Da ein IRT-Betrieb der Geräte eine physikalische Verschaltung der Ports bedingt, die dazu geeignet ist, erhält ein Anwender ohne weitere Anwenderaktionen eine konsistente IRT-Projektierung in der physikalischen Sicht PV. Dabei kann die Einrichtung TM auch die Kommunikationslast auf den einzelnen Übertragungsstrecken optimieren.

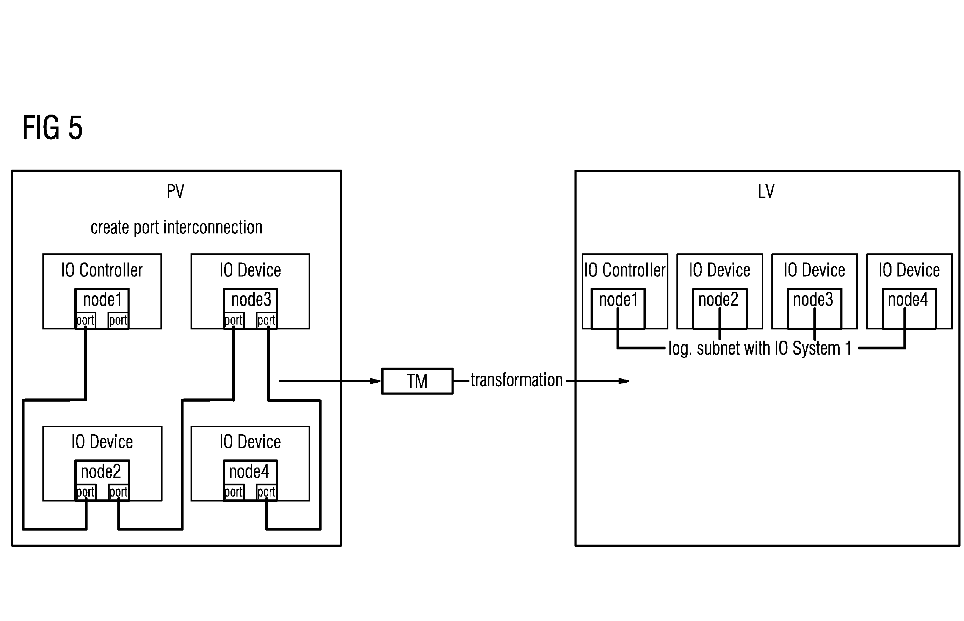

In der Figur 5 ist der umgekehrte Fall gezeigt, nämlich die Umsetzung einer physikalischen Sicht PV in eine logische Sicht LV. Hier ist zu sehen, dass trotz einer tatsächlichen seriellen Verschaltung der Komponenten node1, ..., node4 tatsächlich nur ein einziges logisches Netzwerk (Subnetz) besteht, wobei in der logischen Sicht LV die tatsächliche physikalische Verschaltung der Kommunikationsanschlüsse nicht gezeigt werden braucht, so dass sich eine übersichtlichere Darstellung ergibt.

## Patentansprüche

1. Einrichtung (TM) zum Projektieren von Kommunikationsverbindungen in einer Anordnung mit über die Kommunikationsverbindungen verbindbaren Komponenten (node1, ..., node4),
insbesondere mit Automatisierungskomponenten einer industriellen Automatisierungsanordnung,
wobei ein Editor zur Darstellung und Bearbeitung der Anordnung mit den Kommunikationsverbindungen vorgesehen ist, und
wobei eine Darstellung und Bearbeitung der Anordnung mit den Kommunikationsverbindungen in einer logischen Sicht oder in einer physikalischen Sicht (PV) vorgesehen ist,
**dadurch gekennzeichnet, dass**
die Einrichtung (TM) zur wechselweisen Darstellung und Bearbeitung der Anordnung mit den Kommunikationsverbindungen in der logischen und in der physikalischen Sicht eingerichtet ist,
dass die Einrichtung (TM) zur Umsetzung der logischen Sicht (LV) in die physikalische Sicht (PV), und/oder zu einer Änderung einer bereits gespeicherten physikalischen Sicht nach einer Änderung in der logischen Sicht eingerichtet ist, wobei
die Einrichtung (TM) zur Berücksichtigung vorgegebener technischer Eigenschaften der Komponenten (node1, ..., node4) und vorgegebener funktionaler Eigenschaften oder Ziele der Anordnung zur Umsetzung der Kommunikationsverbindungen ausgebildet ist.

2. Einrichtung (TM) nach Patentanspruch 1,
**dadurch gekennzeichnet,**
**dass** die Einrichtung (TM) zur Umsetzung der physikalischen Sicht (PV) in die logische Sicht (LV), oder zur Änderung einer bereits gespeicherten logischen Sicht nach einer Änderung in der physikalischen Sicht eingerichtet ist,
wobei die Einrichtung (TM) zur Berücksichtigung vorgegebener technischer Eigenschaften der Komponenten (node1 ..., node4) und vorgegebener funktionaler Eigenschaften oder Ziele der Anordnung ausgebildet ist.

3. Einrichtung (TM) nach einem der vorhergehenden Patentansprüche,
**dadurch gekennzeichnet,**
**dass** die Einrichtung (TM) zur Verwendung von vorgegebenen Kommunikationsklassen, Rollen, Sicherheitseinstellungen oder Topologien als zu erreichende funktionale Eigenschaften oder Ziele eingerichtet ist.

4. Einrichtung (TM) nach einem der vorhergehenden Patentansprüche,
**dadurch gekennzeichnet,**
**dass** die Einrichtung (TM) zum Vorschlagen und zum automatischen Einfügen zusätzlicher Komponenten (node1, ..., node4) eingerichtet ist, deren Verwendung zur Erfüllung der vorgegebenen technischen oder funktionalen Eigenschaften oder Zielen erforderlich sind.

5. Einrichtung (TM) nach Patentanspruch 4,
**dadurch gekennzeichnet,**
**dass** als zusätzliche Komponenten (node1 ..., node4) Switche, Repeater, Hubs oder andere aktive Netzwerkkomponenten vorgesehen sind.

6. Einrichtung (TM) nach einem der vorhergehenden Patentansprüche,
**dadurch gekennzeichnet,**
**dass** die Einrichtung (TM) zur Durchführung zumindest eines Optimierungsschrittes, insbesondere zur Verbesserung der Leistungsfähigkeit der Kommunikationsverbindungen oder zur Reduzierung erforderlicher Hardware-Komponenten, eingerichtet ist.

7. Verfahren zur Projektierung von Kommunikationsverbindungen in einer Anordnung mit über die Kommunikationsverbindungen verbindbaren Komponenten (node1 ..., node4),
insbesondere mit Automatisierungskomponenten einer industriellen Automatisierungsanordnung,
**dadurch gekennzeichnet,**
**dass** zur Projektierung der Einsatz einer Einrichtung (TM) nach einem der vorhergehenden Patentansprüche vorgesehen ist, wobei eine automatische Umsetzung einer logischen Sicht in eine physikalische Sicht (PV) oder umgekehrt vorgesehen ist, wobei zu der Umsetzung der Kommunikationsverbindungen vorgegebene technische Eigenschaften der Komponenten (node1 ..., node4) und vorgegebene funktionale Eigenschaften oder Ziele der Anordnung berücksichtigt werden.
